# EUROPÄISCHE PATENTSCHRIFT

(11) **EP 3 478 053 B1**
(45) Veröffentlichungstag und Bekanntmachung des Hinweises auf die Patenterteilung: **14.12.2022**
(21) Anmeldenummer: 16831613.1
(22) Anmeldetag: 29.12.2016
(51) Int. Cl.: A01K 1/015

(54) **EINSTREUMATERIAL SOWIE LIEGEMATRATZE FÜR DIE TIERHALTUNG**
BEDDING MATERIAL AND MAT FOR ANIMAL HUSBANDRY
MATIÈRE FORMANT LITIÈRE, ET COUCHAGE POUR L'ÉLEVAGE

(30) Priorität: 01.07.2016 DE 202016103536 U
(43) Veröffentlichungstag der Anmeldung: 08.05.2019
(73) Patentinhaber: Alpers, Johann, 21717 Fredenbeck (DE); Buck-Emden, Jan, 21682 Stade (DE)
(72) Erfinder: Alpers, Johann, 21717 Fredenbeck (DE); Buck-Emden, Jan, 21682 Stade (DE)
(74) Vertreter: Hansen, Jochen
(86) Internationale Anmeldenummer: PCT/DE2016/100617
(87) Internationale Veröffentlichungsnummer: WO 2018/001396

(56) Entgegenhaltungen:
- EP-A1- 2 241 178
- EP-A2- 1 174 403
- DE-U1-202006 017 318

## Beschreibung

Die Erfindung betrifft ein Einstreumaterial für die Tierhaltung, insbesondere für Liegeboxenlaufställe, bestehend aus einem kalkhaltigen Bestandteil sowie einem Volumen bildenden Bestandteil aus Stroh, Holzsägespäne, Rapshäcksel, Hanf- oder Flachsschäben, abgepressten Gärresten, separierter Gülle, Mist, Kompost und/oder sonstigen faserigen Stoffen. Ferner betrifft die Erfindung eine Liegematratze für die Tierhaltung, insbesondere für Liegeboxenlaufställe bestehend aus dem vorgenannten Einstreumaterial.

Bei der Nutztierhaltung beispielsweise in Milchvieh-, Schweinezucht- oder Geflügelbetrieben oder in der Pferdezucht und -haltung werden die Ställe mit Einstreumaterial belegt, um Ausscheidungen der Tiere zu binden, den Liegekomfort zu verbessern und die Tiergesundheit zu unterstützen.

Beispielsweise ist es in der Sauenhaltung bekannt, neugeborene Ferkel in sogenannten "Ferkelnestern" oder "Ferkelbuchten" zu halten. Diese Nester sind meist mit Gummimatten oder Heizplatten ausgekleidet, die jedoch durch den Kot und Harn der Tiere starker Verunreinigung und Belastung ausgesetzt sind. Ferner folgen die Tiere ihrem Instinkt und fangen an, an diesen hygienisch sehr bedenklichen Nestern zu schnüffeln, und nehmen dabei die Verunreinigungen unmittelbar auf.

Ähnliche Probleme sind auch in der Geflügelhaltung bei der sogenannten Bodenhaltung bekannt, da das Geflügel auf dem Boden häufiger mit dem Kot in Körperkontakt kommt, was die Verbreitung von Parasiten und Krankenheiten fördert. Ferner tritt bei der Bodenhaltung, insbesondere bei Puten, häufig Pododermatitis auf. Pododermatitis wird hervorgerufen durch eine Überbeanspruchung der Sohlenhaut durch Feuchtigkeit, Ammoniak und die üblicherweise verwendeten Einstreumaterialien. Damit heilen kleinere Verletzungen kaum ab. Einstreumaterial klebt in der Wunde und die Haut entzündet sich. Entsprechend hoch ist der medikamentöse Einsatz, ggf. auch unter Zugabe von Antibiotika.

Bei der Milchviehhaltung haben sich zwischenzeitlich Liegeboxenlaufställe durchgesetzt. Die Liegeboxen sind entweder als Hochboxen mit Gummimatten oder als Tiefboxen mit einer Einstreumatratze ausgeführt. Derartige Liegematratzen sind tiergerechter und hygienischer und erfordern wesentlich geringere Investitionskosten als die Gummimatten. Jedoch ist der Pflegeaufwand etwas höher. Als Einstreumaterial wird überwiegend Stroh, teils auch Holzsägespäne, Rapshäcksel, Hanf- oder Flachsschäben und/oder Sand auch in unterschiedlichen Mischungen, verwendet. Teils werden auch separierte Gülle oder Gärreste als Einstreumaterial verwendet, wobei dessen Hygiene in der Fachwelt kritisch beurteilt wird.

Besonders interessant erscheint eine im Stand der Technik bekannte Kalkstrohmatratze, die aus Kalkprodukten, wie ungebranntem Kalk, feingemahlenem Kalksteinmehl oder Kreidekalk, Stroh und Wasser hergestellt wird. Dabei ist der Strohbedarf zwar etwas niedriger und die erstellte Liegematratze stabiler als bei einer Unterlage aus reiner organischer Einstreu, jedoch ist zur Einstellung eines pH-Wertes auf 9 weiterhin ein erheblicher Strohanteil (pH-Wert 6-7) zum Kalk (pH-Wert 12) erforderlich.

Nachteilig an der bekannten Kalkstrohmatratze ist, dass relativ teure und trockene Kalkprodukte verwendet werden. Die Kalkprodukte werden in einem Futtermischwagen mit Stroh und Wasser im Verhältnis von drei bis fünf Anteilen Kalk mit einem Anteil Stroh und ein bis zwei Anteilen Wasser zu einer feuchten Masse vermischt und in die Tiefliegeboxen eingebracht. Nach der Erstbefüllung muss die Matratze verfestigt und durch regelmäßiges Nachstreuen im Abstand von einer bis einigen Wochen ergänzt werden. Gleichwohl beträgt die jährliche Kalkmenge pro Liegebox für die Ergänzung der Einstreu etwa 400 - 500 kg der relativ teuren, trocknen Kalkprodukte.

Ferner ist bei der bekannten Kalkstrohmatratze bzw. dem Kalkeinstreu nachteilig, dass der kohlensaure Matratzenkalk (Kalksteinmehl) stark alkalisch mit einem pH-Wert von mindestens 12 ist. Auch das zusammengemischte Einstreu weist einen pH-Wert von teils über 9 auf. Entsprechend treten bei den Tieren Reizungen, Hautirritationen und dergleichen auf.

Aus der DE 20 2006 017 318 U1 ist ein Klauenbehandlungsmittel zur Klauen-Vorsorgebehandlung insbesondere für in einer Halle freilaufendes Klauenvieh, bestehend aus einer Fertigtrockenmischung aus gemahlenem Ton als Füllstoff und aus einem ebenfalls schüttbaren Zugabeanteil auf Kalkbasis bekannt, bei dem der gemahlene Ton mit einer Feinstkörnung in der Mischung enthalten und die Mischung mit einem flüssigen Medium zu einer sedimentationsstabilen Aufschäumung ausgebildet ist.

Aufgabe der Erfindung ist es, ausgehend von der bekannten Kalkstrohmatratze eine Einstreu bzw. eine Liegematratze aus dieser Einstreu anzugeben, die preiswürdig und vorteilhaft für die Tiergesundheit und die Bodenwirtschaft ist und die laufenden Arbeitskosten für die Unterhaltung der Liegeboxen signifikant reduziert.

Gelöst wird diese Aufgabe mit einem Einstreumaterial gemäß Anspruch 1 und einer Liegematratze gemäß Anspruch 9.

In Kalkwerken, die Branntkalk herstellen, wird das verwendete Kalkstein-Gestein teilweise gewaschen, um beste Qualitäten zu erzielen. Inbesondere wird dabei in kalksteinverarbeitenden Betrieben die sog. Vorabsiebung in speziellen Anlagen gewaschen und nach Korngrößen sortiert. In beiden Fällen verbleibt ein Reststoffanteil der Korngrößen < 0,1 mm. Dieser Schlamm, eine Kalk-/Tonsuspension, wird in den kalksteinverarbeitenden Betrieben mittels Kammerfilterpressen oder Absetzbecken auf einen Trockensubstanzgehalt von ca. 80 % entwässert. Der dabei entstehende Kammerfilterkuchen fällt als relativ feste Platten aus der Presse und zerfällt zu einem lockeren, klumpigen Haufwerk. Alternativ wird der Schlamm, bestehend aus einer Kalk-/Tonsuspension, in Absetzbecken geleitet, indem sich dann die Feinteilchenbestandteile am Boden absetzen. Nach einer ausreichenden Trocknungszeit ergibt sich eine lockere, klumpige Masse gleicher Zusammensetzung, wie der Kammerfilterkuchen. Nachfolgend wird auch diese aus den Absetzbecken gewonnene Masse als Kammerfilterkuchen bezeichnet, da er die gleiche stoffliche Zusammensetzung aufweist. Der Kammerfilterkuchen, der bei der Kalkstein- und/oder Dolomitsteinwäsche oder auch in der Zementindustrie anfällt, wird zur Zeit nicht gehandelt, sondern auf Halden deponiert, steht also sehr günstig zur Verfügung.

Ferner gibt es Kalksteinmehl als Produkt von Kalkwerken. Zu dessen Herstellung werden gewaschene Kalksteinsplitte durch Mahltrocknung zu Kalksteinmehlen verschiedener Feinheit < 0,1 mm aufgemahlen. Dieser Rohstoff wird teils zu Branntkalk weiterverarbeitet oder auch als Düngemittelzusatz in der ungebrannten Form am Markt verwendet. Dieses Kalksteinmehl besteht fast vollständig aus (Ca, Mg) CO₃ z.B. zu 95 % oder gar 98 %. Je nach zugrundelegendem Kalkstein ist der Calziumcarbonatanteil oder der Magnesiumcarbonatanteil größer.

Dadurch, dass der kalkhaltige Bestandteil überwiegend oder ausschließlich (75 % bis 100 %) aus Kammerfilterkuchen besteht, der aus den abschlämmbaren Feinstbestandteilen bei einer Kalkstein- und/oder Dolomitsteinwäsche anfällt, nachdem diese abschlämmbaren Feinstbestandteile in einer Kammerfilterpresse entwässert sind, kann ein Einstreumaterial bereit gestellt werden, das aufgrund des Zustandes des Kammerfilterkuchens mit einem pH-Wert von 8,5 bis 9 insgesamt nur leicht alkalisch (pH-Wert > 8) wirkt. Gleichwohl führt diese leicht alkalische Einstellung zu einer deutlichen Verbesserung der Hygiene, wirkt jedoch nicht aggressiv auf empfindliche äußere Organe der Tiere. Das leicht alkalische Milieu von pH-Werten von geringfügig > 8 unterstützt die Keimhemmung und verbessert die Klauen- und Eutergesundheit. Durch die Feinheit des Filterkammerkuchens ergibt sich eine sehr große Oberfläche des Materials. Daraus wiederum ergibt sich eine sehr hohe Aufnahmefähigkeit von Feuchtigkeit/Saugfähigkeit. Diese Eigenschaft in Verbindung mit dem optimalen pH-Wert ergibt das Milieu, in dem die Kuh das erfährt, was mit "Kuhkomfort" beschrieben wird. Keime z.B. durch Fäkalien und auslaufende Milch können deutlich weniger entstehen. Ergänzend kann der kalkhaltige Bestandteil auch bis zu 25 % Kalksteinmehl enthalten. Kalksteinmehl hat zwar einen deutlich höheren pH-Wert von beispielsweise 12, jedoch kann durch Zumischen des Kalksteinmehls der gewünschte pH-Wert des gesammten Einstreumaterials in Richtung zu etwas höheren pH-Werten eingestellt werden. Dies kann je nach Anwendungsgebiet die keimbegrenzende Wirkung verbessern und beispielsweise bei der Anwendung in der Geflügelhaltung zu einer Optimierung der Einstreu führen. Des Weiteren kann mit dem zusätzlichen Bestandteil Kalksteinmehl die Streufähigkeit des Einstreumaterials beeinflusst werden.

Die neben den Kalk- und/oder Dolomitsteinpartikeln ergänzenden Feinstbestandteile aus der Kalk- und/oder Dolomitsteinwäsche unterstützen die Bindigkeit des Einstreumaterials und somit die Möglichkeit zur Herstellung einer stabilen, tiergerechten Liegematratze. Eine derartige Liegematratze zeichnet sich dadurch aus, dass für die Neuanlage der Liegematratze 50 - 90 Gew.%, insbesondere 70 - 80 Gew.% kalkhaltiger Bestandteil mit 10 - 50 Gew.%, insbesondere 20 - 30 Gew.% des Volumen bildenden Bestandteils gemischt sind. Dabei können neben Stroh als volumenbildende Bestandteile, beispielsweise Holzsäge- und Hobelspäne, Rapshäcksel, Hanf- oder Flachsschäben, Gärreste, Mist, separierter Gülle und/oder Kompost verwendet werden. Die Bezeichnung Gew.% soll verdeutlichen, dass es sich um den Massenanteil der jeweiligen Mischungskomponente handelt.

Für das Nachstreuen auf die Liegematratze wird das gleiche Einstreumaterial verwendet. Bei der Verwendung von Stroh als volumenbildenden Bestandteil ergibt sich ein Jahresverbrauch zum regelmäßigen Nachstreuen in Abständen von 2 - 6 Wochen von etwa 800 - 1000 kg fertig gemischtes Einstreumaterial pro Liegebox und Jahr. Gegenüber der Verwendung von reinem Kalksteinmehl in den bekannten Kalkstrohmatratzen wird bei Verwendung von Kammerfilterkuchen der Strohbedarf bzw. der Bedarf an dem volumenbildenden Bestandteil deutlich reduziert.

Ergänzend kann zum Erstellen oder Pflegen einer Liegematratze das Einstreumaterial mit Wasser gemischt werden, sofern die natürliche Restfeuchte nicht ausreicht. Aufgrund des Feuchte haltenden Bestandteils von Tonmineralien in dem Einstreumaterial ist die Zugabe von Wasser nicht zwingend und bei den vorgenannten Gewichtsanteilen von kalkhaltigem Bestandteil und volumenbildendem Bestandteil maximal zu 20 Gew.% Wasser möglich.

Wenn der Kammerfilterkuchen in der Trockensubstanz 5 - 30 Gew. %, insbesondere 10 - 20 Gew. % silikatische Verbindungen enthält, hat der Kammerfilterkuchen einen idealen Anteil von Tonmineralen, die für eine bessere Bindigkeit verantwortlich sind. Dabei kann eine Wasserzugabe häufig entfallen, da der Kammerfilterkuchen eine ausreichende relative Feuchte aufweist. Die Tonminerale haben neben besseren bindenden Eigenschaften mit dem volumenbildenden Bestandteil aus Stroh, Holzsägespäne, Rapshäcksel, Hanf- oder Flachsschäben und/oder Kompost, den Vorteil, dass sie hautpflegend wirken und die Zitzenhaut geschmeidig halten. Insgesamt wird eine gute Bindigkeit des Einstreumaterials gewährleistet.

Beim Verlassen der Liegebox wird von der Kuh Einstreumaterial ausgetragen und gelangt in Entmistungskanäle und Lagerbehälter. Durch die sehr geringe Partikelgröße von deutlich kleiner 0,1 mm bleibt das Einstreumaterial in der Gülle in Schwebe und sinkt nicht ab, auch wenn noch kleine Klümpchen enthalten sind. Die feinen Kalkpartikel und Tonminerale fördern die Fermentierung der Gülle und wirken geruchsbindend, in dem beispielsweise keine übelriechenden Schwefelwasserstoffe und langkettige schwefelhaltige Schleimstoffe entstehen. Bei der Ausbringung der Gülle auf Pflanzenbestände, wie es bei der Grünlandbegüllung während der Vegetation der Fall ist, fließt die Gülle besser von den Pflanzen ab und führt zu geringeren Futterverschmutzungen.

Bevorzugt sind die silikatischen Verbindungen aktive Tonminerale. Die Tonminerale haben durch ihre Eigenschaft, Kationen zu binden, die Fähigkeit der Bindung von Ammoniumstickstoff (NH₄) und Amoniak (NH₃), was zu geringeren Ammoniakverlusten und einer besseren Nährstoffwirkung der Gülle führt. Somit sind die Tonminerale nicht nur hinsichtlich der Bindigkeit im Einstreumaterial und zur Bildung der Liegematratze vorteilhaft, sondern verbessern die Gülle und bei Austrag dessen auf die Äcker die Fruchtbarkeit des Bodens. Aktive Tonminerale sind sog. Dreischicht-Tonminerale mit einer Tetraederschicht-Oktaederschicht-Tetraederschicht (TOT), z.B. Illit, Smectit und Vermiculit. Denn diese 2:1 Tonminerale besitzen eine höhere Kationenaustauschkapazität als Zweischicht-Tonminerale und können daher mehr Nährstoffe wie Kalium- oder Ammoniumionen an Pflanzen abgeben, während sie die von den Wurzeln abgegebenen Hydroniumionen an deren Stelle in ihrer Zwischenschicht einlagern. Eine Reduzierung der Ammoniakverluste (NH₃) aus der Tierhaltung kann somit mit diesem Einstreumaterial unterstützt werden.

Der Kammerfilterkuchen enthält in der Trockensubstanz 40 - 80 % CaCO₃, was einem CaO-Gehalt von 30 - 45 % entspricht. Damit erfüllt der Filterkuchen die Vorgaben in der Düngemittelverordnung für "Kalkdünger aus der Verarbeitung aus Kalkstein oder Dolomit", die einen Mindestgehalt von 30 % CaO in der Trockensubstanz vorschreibt. Wird Dolomitgestein verarbeitet, enthält der Filterkuchen entsprechende Anteile Magnesium. Neben Kalzium und Magnesium enthält der Filterkuchen 20 - 30 % silikatische Verbindungen, hauptsächlich in Form von aktiven Tonmineralen. Ergänzend zur Kalksteinkomponente oder ausschließlich kann der Kammerfilterkuchen auch Dolomitbestandteile von 20 - 80 % in der Trockensubstanz aufweisen.

Wenn der Kammerfilterkuchen bis zu 10 Gew.% Zeolithe, insbesondere Klinoptilolithe enthält, wird die Tiergesundheit weiter gefördert. Klinoptilolithe können Toxine binden und somit Pilzerkrankungen bei aus dem Euter auslaufender Milch, was bei Hochleistungskühen vor und nach dem Melken leider unausweichlich ist, vorbeugen.

Um eine besonders homogene und leicht zu verteilende Einstreumasse zu erhalten, ist der Volumen bildende Bestandteil gehäckseltes Stroh. Das gehäckselte Stroh bindet Feuchtigkeit sehr gut und lässt sich aufgrund der kürzeren Faserlängen auch sehr gut mit mechanisierten Ausbringhilfen im Liegeboxenstall ausbringen. Dabei kann ein Zusatz von bis zu 25 Gew.% Kalksteinmehl, bevorzugt jedoch nicht mehr als 10 Gew.% Kalksteinmehl, im kalkhaltigen Bestandteil die Streu- und Rieselfähigkeit des Einstreumaterials verbessern. Damit dürfte es problemlos möglich sein, herkömmliche Einstreuautomaten mit dem so vorgemischten Einstreumaterial zu beschicken und ein gleichmäßiges, nicht staubendes Nachstreuen in die Liegeboxen zu ermöglichen.

Besonders bevorzugt sind 50 - 90 Gew.%, inbesondere 70 - 80 Gew.% kalkhaltiger Bestandteil mit 10 - 50 Gew.%, insbesondere 20 - 30 Gew.% Stroh gemischt. Bei diesem Mischverhältnis lässt sich das Einstreumaterial leicht und schnell in die Tiefboxen des Boxenlaufstalls einbringen und durch das sich darauf ablegende Vieh zu einer bindigen Matratze verfestigen.

Nachfolgend wird die Erfindung anhand zweier Ausführungsbeispiele detailliert erläutert.

In beiden Ausführungsbeispielen wird ein Kammerfilterkuchen aus der Kalk- und Dolomitsteinwäsche verwendet, der in der Trockensubstanz etwa 20 - 30 Gew.% CaMg(CO₃)₂ (Dolomitstein) und ca. 40 - 50 Gew.% CaCO₃ (Kalkstein) sowie 20 - 25 Gew.% silikatische Verbindungen, nämlich insbesondere aktive Tonminerale und Klinoptilolithe, enthält.

Im ersten Ausführungsbeispiel wird dieser Kammerfilterkuchen ausschließlich als kalkhaltiger Bestandteil verwendet. Dieser noch ca. 20 % Restfeuchte enthaltende Kammerfilterkuchen wird in einen Futtermischwagen mit zum Beispiel 22 m³ Volumen zusammen mit Stroh eingefüllt. Dabei werden 3750 kg Kammerfilterkuchen und 1250 kg Stroh wechselseitig vermischt. Je nach Restfeuchte des Kammerfilterkuchens und der gewünschten Konsistenz der Mischung können bis zu 500 Liter Wasser beim Mischvorgang zugeführt werden.

Dieses im Futtermischwagen gut gemischte Einstreumaterial wird nun im Liegeboxenlaufstall in die Tiefboxen zur Erstbefüllung ausgebracht. Dabei reicht die o.g. Mischung von 5000 kg für beispielsweise 10 Tiefboxen, sodass pro Tiefboxenplatz eine Menge von ca. 500 kg Einstreumaterial zur Erstellung einer Liegematratze benötigt wird.

Nach dem Ausbringen des Einstreumaterials aus dem Futtermischwagen in die Tiefboxen sollte die so entstandene Unterlage mit einer Harke egalisiert werden. Optional kann ein Boxenplaner verwendet werden.

Zum regelmäßigen Nachstreuen, das etwa alle zwei bis sechs Wochen erfolgen sollte, wird die gleiche Mischung wie bei der Erstbefüllung verwendet, wobei diese Mischung wiederum im Futtermischwagen erstellt und mit diesem ausgebracht wird. Auch hierbei ist eine Wasserzugabe nur erforderlich, falls die Bindigkeit der Liegematratze nicht mehr ausreicht.

Bei den Versuchen hat sich herausgestellt, dass bei einer regelmäßigen Ergänzung der Liegeboxen mit einem Verbrauch von ca. 800-1000 kg Mischung pro Jahr und Liegebox zu kalkulieren ist. Die Liegematratze kann bei guter Pflege mehrere Jahre Bestand haben. Dabei können die Liegeboxen mit einem Boxenplaner auch zwischen den Einstreuintervallen gepflegt werden.

Im zweiten Ausführungsbeispiel enthält der kalkhaltige Bestandteil 90 % Kammerfilterkuchen und zusätzlich 10 % Kalksteinmehl.

Das Anmischen erfolgt ebenfalls im Futtermischwagen, wobei 3400 kg Kammerfilterkuchen, 350 kg Kalksteinmehl und 1250 kg Stroh wechselseitig vermischt werden. Auch hier können je nach Restfeuchte des Kammerfilterkuchens und der gewünschten Konsistenz der Mischung bis zu 500 Liter Wasser beim Mischvorgang zugeführt werden.

Dieses im Futtermischwagen gut gemischte Einstreumaterial wird dann beispielsweise in der Geflügelhaltung auf dem Boden der Geflügelhalle ausgebracht. Dieses Einstreu bildet eine wärmende Isolierschicht am Boden, einen trockenen Untergrund mit guter Saugkraft und geringer Staubbelastung. Darüber hinaus zeigt dieses Einstreumaterial gute Ausbringeigenschaften, ist also streufähig und kann leicht gleichmäßig verteilt werden. Da die Rohstoffe für das Einstreumaterial günstig am Markt einzukaufen sind, ist dieses Einstreu wirtschaftlich einsetzbar. Der besondere Vorteil liegt in der Gesunderhaltung der Füsse des Geflügels, insbesondere in der Putenhaltung. Das in der Einstreu enthaltene Zeolith bindet patogene Keime, die positiv geladen sind, wohingegen das Zeolith negativ geladen ist. Ferner wird Ammoniak gebunden, so dass die Stallluft verbessert wird.

Ein wesentlicher Vorteil gegenüber der bekannten Kalkstrohmatratze ergibt sich in der Beseitigung des bisher den Tiefboxen zugeschriebenen Nachteils der höheren Unterhaltungs- und Pflegearbeitskosten. Einfaches ausharken - fertig ! Die Pflege bringt den entscheidenden Kostenvorteil im direkten Vergleich und dann kommt noch automatisch mit der Gülleausbringung Kalk zur Bodenverbesserung vernünftig dosiert auf die Böden (und nicht wie sonst üblich alle 3 Jahre mit den entsprechenden Nachteilen dieses Verfahrens).

Neben den unmittelbaren Kostenvorteilen, ist es auch vorteilhaft, dass durch den Verbrauch des Einstreumaterials durch Austragen aus den Liegeboxen durch die Kühe bis zu 1000 kg Filterkuchen mit Strohbestandteilen in die Gülle gelangen. Dort fördern die Kalkpartikel und die im Kammerfilterkuchen ebenfalls enthaltenen Tonminerale die Fermentierung der Gülle und wirken geruchsbindend, da kaum Schwefelwasserstoffe und langkettige schwefelhaltige Schleimstoffe entstehen. Das Zeolith sorgt für die Verbesserung der Luft im Stall für Tier und Mensch durch die Bindung/Reduzierung von Ammoniak. Die Tonminerale können Kationen binden, sodass es zu geringeren Ammoniakverlusten und einer besseren Nährstoffwirkung der Gülle führt. Ferner führt die Ausbringung der Gülle zu einer natürlichen Kalkung der Böden und trägt somit Vorsorge vor Bodenversauerung. Die im Kammerfilterkuchen enthaltenen Klinoptilolithe führen zu einer Verbesserung des Bodens und zu einem verbesserten Pflanzenwachstum. Dies führt wiederum zu besserem Futter, sodass Mineraldünger deutlich reduziert werden kann und damit die Nitratbelastung des Bodens stark verringert wird.

Ferner wird durch das leicht alkalische Milieu des Einstreumaterials und damit der Liegematratze eine deutliche Keimreduzierung im Bereich der Liegeboxen erreicht. Die Folge ist eine verbesserte Tiergesundheit und somit eine signifikante Reduzierung des Einsatzes von Antibiotika. Die im Kammerfilterkuchen und somit in der Liegematratze enthaltenen Tonminerale, insbesondere die Klinoptilolithe wirken pflegend auf die äußeren Organe der Kuh, insbesondere die Haut pflegend und die Zitzenhaut geschmeidig haltend.

Da es sich bei dem in der Liegematratze enthaltenen Kammerfilterkuchen um ein Naturprodukt aus der Kalk- und Dolomitsteinwäsche handelt, wird durch dieses Einstreumaterial die Viehwirtschaft wirtschaftlicher und ökologisch wertvoller. Eine vergleichende Kalkulation mit der Kalk-Stroh-Matratze ergibt durch die geringen Unterhaltungskosten/Arbeitskosten einhergehend mit den anderen Vorteilen (Gülleverbesserung, Bodenverbesserung, Pflanzenwachstums-Verbesserung) für den Verbraucher substantielle wirtschaftliche Vorteile. Weitere Kostenvorteile liegen darin, dass durch die Verbesserung der Tiergesundheit Tierarzt- und Medikamentenkosten gespart werden.

## Patentansprüche

1. Einstreumaterial für die Tierhaltung, insbesondere für Liegeboxenlaufställe, bestehend aus einem kalkhaltigen Bestandteil sowie einem Volumen bildenden Bestandteil aus Stroh, Holzsägespäne, Rapshäcksel, Hanf- oder Flachsschäben, abgepressten Gärresten, Mist und/oder Kompost, **dadurch gekennzeichnet, dass** der kalkhaltige Bestandteil 0 - 25 Gew.% Kalksteinmehl und 75 - 100 Gew.% Kammerfilterkuchen enthält, wobei der Kammerfilterkuchen aus den abschlämmbaren Feinstbestandteilen bei einer Kalkstein- und/oder Dolomitsteinwäsche anfällt, nachdem diese abschlämmbaren Feinstbestandteile in einer Kammerfilterpresse oder einem Absetzbecken entwässert sind, wobei der Kammerfilterkuchen in der Trockensubstanz 5 - 30 Gew.% silikatische Verbindungen enthält.

2. Einstreumaterial nach Anspruch 1, **dadurch gekennzeichnet, dass** der Kammerfilterkuchen in der Trockensubstanz 10 - 20 Gew.% silikatische Verbindungen enthält.

3. Einstreumaterial nach Anspruch 2, **dadurch gekennzeichnet, dass** die silikatischen Verbindungen aktive Tonminerale sind.

4. Einstreumaterial nach Anspruch 1, 2 oder 3, **dadurch gekennzeichnet, dass** der Kammerfilterkuchen in der Trockensubstanz 40 - 80 Gew.% CaCO₃ (Kalkstein) enthält.

5. Einstreumaterial nach Anspruch 1, 2, 3 oder 4, **dadurch gekennzeichnet, dass** der Kammerfilterkuchen in der Trockensubstanz 20 - 80 Gew.% CaMg(CO₃)₂ (Dolomit) enthält.

6. Einstreumaterial nach einem der vorangehenden Ansprüche, **dadurch gekennzeichnet, dass** der Kammerfilterkuchen bis zu 10 Gew.% Zeolithe, insbesondere Klinoptilolithe enthält.

7. Einstreumaterial nach einem der vorangehenden Ansprüche, **dadurch gekennzeichnet, dass** der Volumen bildende Bestandteil gehäckseltes Stroh ist.

8. Einstreumaterial nach Anspruch 7, **dadurch gekennzeichnet, dass** 50 - 90 Gew.%, inbesondere 70 - 80 Gew.% kalkhaltiger Bestandteil mit 10 - 50 Gew.%, insbesondere 20 - 30 Gew.% Stroh gemischt sind.

9. Liegematratze für die Tierhaltung, insbesondere für Liegeboxenlaufställe bestehend aus dem vorgenannten Einstreumaterial nach einem der vorangehenden Ansprüche, **dadurch gekennzeichnet, dass** sie aus 50 - 90 Gew.%, insbesondere 70 - 80 Gew.% des kalkhaltigen Bestandteils und 10 - 50 Gew.%, insbesondere 20 - 30 Gew.% des Volumen bildenden Bestandteils besteht.

10. Liegematratze nach Anspruch 9, **dadurch gekennzeichnet, dass** das Einstreumaterial maximal 20 Gew.% Wasser enthält.

## Claims

1. A bedding material for animal husbandry, in particular for freestall cubicles, consisting of a calciferous constituent and also a bulk-forming constituent composed of straw, wood shavings, chopped rape straw, hemp shives or flax shives, pressed fermentation residues, manure and/or compost, **characterised in that** the calciferous constituent contains 0 - 25% by weight powdered limestone and 75 - 100% by weight chamber filter cake, wherein the chamber filter cake is produced from the elutriable ultra-fine constituents in limestone and/or dolomite stone washing, once these elutriable ultra-fine constituents have been dewatered in a chamber filter press or a sedimentation tank, wherein the chamber filter cake contains 5 - 30% by weight siliceous compounds in the dry substance.

2. A bedding material according to claim 1, **characterised in that** the chamber filter cake contains 10 - 20% by weight siliceous compounds in the dry substance.

3. A bedding material according to claim 2, **characterised in that** the siliceous compounds are active clay minerals.

4. A bedding material according to claim 1, 2 or 3, **characterised in that** the chamber filter cake contains 40 - 80% by weight CaCO₃ (limestone) in the dry substance.

5. A bedding material according to claim 1, 2, 3 or 4, **characterised in that** the chamber filter cake contains 20 - 80% by weight CaMg(CO₃)₂ (dolomite) in the dry substance.

6. A bedding material according to one of the preceding claims, **characterised in that** the chamber filter cake contains up to 10% by weight zeolites, in particular clinoptilolites.

7. A bedding material according to one of the preceding claims, **characterised in that** the bulk-forming constituent is chopped straw.

8. A bedding material according to claim 7, **characterised in that** 50 - 90% by weight, in particular 70 - 80% by weight, calciferous constituent is mixed with 10 - 50% by weight, in particular 20 - 30% by weight, straw.

9. A lying mat for animal husbandry, in particular for freestall cubicles, consisting of the aforementioned bedding material according to one of the preceding claims, **characterised in that** it consist of 50 - 90% by weight, in particular 70 - 80% by weight, of the calciferous constituent and 10 - 50% by weight, in particular 20 - 30% by weight, of the bulk-forming constituent.

10. A lying mat according to claim 9, **characterised in that** the bedding material contains at most 20% by weight water.

## Revendications

1. Matériau de litière pour l'élevage d'animaux, en particulier pour stabulation libre à logettes, constitué d'un composant contenant du calcaire ainsi que d'un composant donnant du volume à base de paille, de sciure de bois, de colza haché, de chènevotte de chanvre ou d'anas de lin, de résidus de fermentation pressés, de fumier et/ou de compost, **caractérisé en ce que** le composant contenant du calcaire contient de 0 à 25 % en poids de farine de calcaire et de 75 à 100 % en poids d'un gâteau de filtre-presse à chambres, le gâteau de filtre-presse à chambres étant obtenu à partir des composants fins pouvant être débourbés lors d'un lavage de calcaire et/ou de dolomie, après que ces composants fins pouvant être débourbés ont été égouttés dans un filtre-presse à chambres ou un bassin de décantation, le gâteau de filtre-presse à chambres contenant 5 à 30 % en poids de composés silicatés dans la substance sèche.

2. Matériau de litière selon la revendication 1, **caractérisé en ce que** le gâteau de filtre-presse à chambre contient 10 à 20 % en poids de composés silicatés dans la substance sèche.

3. Matériau de litière selon la revendication 2, **caractérisé en ce que** les composés silicatés sont des minéraux argileux actifs.

4. Matériau de litière selon la revendication 1, 2 ou 3, **caractérisé en ce que** le gâteau de filtre-presse à chambre contient 40 à 80 % en poids de CaCO₃ (calcaire) dans la substance sèche.

5. Matériau de litière selon la revendication 1, 2, 3 ou 4, **caractérisé en ce que** le gâteau de filtre-presse à chambre contient 20 à 80 % en poids de CaMg(CO₃)₂ (dolomite) dans la substance sèche.

6. Matériau de litière selon l'une des revendications précédentes, **caractérisé en ce que** le gâteau de filtre-presse à chambre contient jusqu'à 10 % en poids de zéolithes, en particulier de clinoptilolites.

7. Matériau de litière selon l'une des revendications précédentes, **caractérisé en ce que** le composant donnant du volume est de la paille hachée.

8. Matériau de litière selon la revendication 7, **caractérisé en ce que** 50 à 90 % en poids, en particulier 70 à 80 % en poids de composant calcaire sont mélangés à 10 à 50 % en poids, en particulier 20 à 30 % en poids de paille.

9. Litière pour l'élevage d'animaux, en particulier pour stabulation libre à logettes, constituée du matériau de litière précité selon l'une des revendications précédentes, **caractérisé en ce qu'**il est constitué de 50 à 90 % en poids, en particulier 70 à 80 % en poids, du composant contenant du calcaire et de 10 à 50 % en poids, en particulier 20 à 30 % en poids, du composant donnant du volume.

10. Litière selon la revendication 9, **caractérisée en ce que** le matériau de litière contient au maximum 20 % en poids d'eau.
